# EUROPEAN PATENT SPECIFICATION

(11) **EP 4 114 991 B1**
(45) Date of publication and mention of the grant of the patent: **22.10.2025**
(21) Application number: 22727433.9
(22) Date of filing: 05.05.2022
(51) Int. Cl.: C21C 5/40, C21C 5/46, F27D 17/20, F27D 17/30, C21C 5/52

(54) **STEEL PLANT WITH ELECTRIC ARC FURNACE AND FUME COLLECTION AND TREATMENT SYSTEM AND METHOD OF COLLECTING AND TREATING FUMES GENERATED BY A STEEL MAKING PLANT**
STAHLWERK MIT ELEKTROLICHTBOGENOFEN UND ABGASSBEHANDLUNGSSYSTEM SOWIE VERFAHREN ZUM SAMMELN UND BEHANDELN VON ABGASS, DER VON EINEM STAHLWERK ERZEUGT WIRD
ACIÉRIE AVEC FOUR À ARC ÉLECTRIQUE ET SYSTÈME DE COLLECTE ET DE TRAITEMENT DES FUMÉES ET PROCÉDÉ DE COLLECTE ET DE TRAITEMENT DES FUMÉES GÉNÉRÉES PAR UNE ACIÉRIE

(30) Priority: 11.05.2021 IT 202100012065
(43) Date of publication of application: 11.01.2023
(73) Proprietor: SMS group S.p.A., 33017 Tarcento (UD) (IT)
(72) Inventor: BERTOLISSIO, Arrigo, 33017 Tarcento (IT); LANARI, Andreas, 33017 Tarcento (IT)
(74) Representative: Zanettin, Gianluigi
(86) International application number: PCT/IB2022/054162
(87) International publication number: WO 2022/238822

(56) References cited:
- CN-A- 110 252 111
- CN-A- 110 793 338
- CN-A- 111 112 287
- JP-A- H1 157 373
- JP-B2- 3 060 441
- KR-B1- 101 166 476
- US-A1- 2011 318 247

## Description

### Field of application

The present invention relates a steel making plant with an electric arc furnace.

### Background art

Typically, the direct melting of materials which contain iron, such as scrap, is performed in electric arc furnaces (EAF).

The primary feedstock for EAFs is ferrous scrap, which can consist of scrap coming from within the steel mill, scraps, waste from mechanical industries (e.g., vehicle manufacturers), and demolition or post-consumer scrap (e.g., end-of-life products such as cars, buildings).

Direct reduced iron (DRI) is also increasingly being used as a feedstock for EAFs because of its low gangue content, lower content of undesired metals (e.g. copper), and low CO2 footprint in the manufacturing process.

Finally, liquid pig iron could also be used in the material mix to feed an electric arc furnace.

An electric arc furnace is usually charged with scrap and/or DRI and/or liquid pig iron by:
- metal baskets: the scrap/DRI is usually loaded into baskets and then charged into the furnace after opening the roof;
- continuous wall charging systems: vibrating, traversing or rotating conveyors for scrap/DRI continuously discharge raw materials into the furnace; instead, liquid pig iron is charged with dedicated chutes; continuous wall charging may include scrap preheating or not.
- continuous charging system from the roof: vibrating, translating, rotating or pneumatic conveyors for DRI/scrap discharge the raw material onto a dedicated opening of the furnace roof (called 5th hole or 3rd hole).

Secondary metallurgy is performed on the molten steel after melting in the EAF to the casting point. It is typically performed at ladle treatment stations, with the molten steel remaining in the ladle itself. These treatment stations generally consist of an arc heating unit, called a ladle furnace (LF), which allows the final temperature of the liquid steel for the casting operation to be adjusted. The treatment involves the addition of scorifying agents and binding elements to regulate the chemical composition of the finished steel. In some cases, the vacuum processing units are used to achieve special gas content requirements.

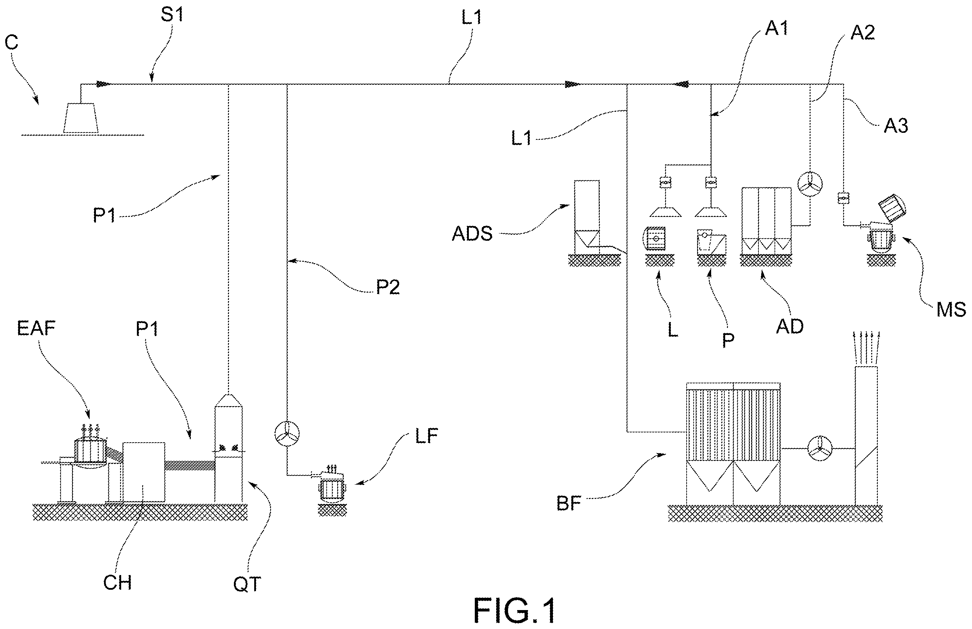

A simplified diagram of a steel plant provided with an electric arc furnace and a ladle furnace is shown in Figure 1.

### Fume collection systems

A steel making plant generally comprises an emission collection system, which in particular can suck the emissions generated during the melting process, and convey them to a treatment system.

Each electric arc furnace (EAF) and ladle furnace (LF) is provided with its own suction system. In Figure 1, the EAF suction system is shown as P1, while the LF suction system is shown as P2. Suctions P1 and P2 are named primary suctions.

In the EAF, primary suction may be performed either through an appropriate hole in the furnace roof (called the 4th hole or 2nd hole) or through the material feed channel into furnaces with continuous charging systems. In the latter case, the fumes are sucked through the continuous charging system and preheat the scrap before it is charged into the EAF.

Furthermore, the EAF electric arc furnace is provided with a hood C located on the roof of the building containing the furnace. The function of the hood C is to ventilate the building during the melting step and to collect the fumes generated inside the building following the opening of the furnace roof during the basket loading step. This additional suction system of the EAF is referred to as secondary suction and is indicated by S1 in Figure 1.

The gases emitted in the basket loading step are diffused inside the building and are strongly diluted before being collected by hood C. The secondary suction S1 must thus treat much larger volumes of fumes than the primary suction P1. For this reason, the suction capacity of the secondary suction system is much greater than that of the primary suction. Furthermore, due to dilution, the fumes treated by the secondary suction system S1 are much cooler than those treated by the primary suction.

The fumes collected from the suction systems of the EAF and the LF contain dust, nitrogen oxides and sulfur oxides, carbon monoxide, and organic pollutants, e.g., such as volatile organic compounds (VOCs), chlorobenzenes, polychlorinated biphenyls (PCBs), polycyclic aromatic hydrocarbons (PAHs), dioxins (PCDDs), and furans (PCDFs). The presence of organics in emissions depends primarily on the quality of the scrap used.

As shown in the diagram in figure 1, there may also be other points of possible fume emissions in the steel making plant, e.g., such as the dust collection of additive conveyor systems AD, the zones of refractory demolition and lining of the ladle L and the tundish P, and the handling of slag MS. These emissions are a consequence of mechanical activities, not of a combustion and/or melting process; for these reasons, they contain mainly dust, and not gaseous emissions, such as nitrogen and sulfur oxides. The fume collection system thus comprises auxiliary suctions A1, A2 and A3 dedicated to these possible emission points.

Figure 1 diagrammatically shows a fume collection and treatment system in a steel making plant provided with an EAF.

The fume collection and treatment system comprises a main duct L1 into which all the suction systems P1, P2, S1, A1, A2 and A3 discharge; all the fumes collected by the suction systems are led to a fume treatment system, which will be explained in greater detail below, through the main duct L1.

Primary suction P1 from EAF electric arc furnace: the hot fumes from the EAF furnace are collected from the furnace roof through a water-cooled elbow, and conveyed to a cooled chamber CH, where the post-combustion of the CO generated in the melting process is completed; the primary fumes are sucked in at a high temperature (over 1000°C) and are then cooled by means of water-cooled ducts CH, and then by water cooling towers QT or convection exchangers (natural or forced) to reduce the temperature so that they can be treated downstream in a bag filter BF installed in the main duct L1 and part of the fume treatment system.

Primary suction P2 from ladle furnace LF: the fumes are collected from the LF furnace roof with a single-wall (uncooled) pipe and conveyed into the main duct L1 of the fume system. The temperature of the fumes sucked from the LF is below 180°C

Secondary suction S1 from EAF electric arc furnace: the hood C, installed on top of the building, captures the fumes during the EAF charging steps and allows ventilation during the melting steps; it also allows the suction of the air necessary to further cool the fumes collected by the primary suction P1 before being processed in the bag filter BF.

Auxiliary suction points A1, A2, and A3: the fume collection system may comprise auxiliary suction points which depend on site-specific plant configurations, which may include, for example, material or additive handling, tundish ladle demolition, tundish ladle tipping, EAF refractory material demolition, etc.

### Fume treatment system

The collected fumes are treated in a bag filter BF and then dispersed into the atmosphere.

Substantially, the bag filters capture dust, including all heavy metals present as particulate matter at the filtering temperature, as well as some organic compounds.

Generally, adsorbing materials (e.g. activated carbon, pulverized activated lignite coke or mixtures of these with lime, clay) are dosed in the fume main duct L1 upstream of the bag filter by means of an appropriate dosing device ADS to reduce persistent organic pollutants, in particular, to control the content of PCDD dioxins and PCDF furans. The adsorbent material is retained by the filter bags BF and, after absorbing dioxins and furans, is disposed of with the dust collected by the filter.

Currently, the fume treatment systems of a steel making plant are configured to abate the following pollutants:
- Dust, in the bag filter with mechanical filtration;
- Dioxins by injecting activated carbon or lignite or clay before the filter to adsorb dioxins; the injected adsorbent is collected in the filter along with the dust; the dust is a special waste (containing heavy metals, dioxins, organics etc.) and must be properly treated/disposed of.

However, the current fume treatment systems in a steel making plant do not allow the abatement of NOx in the gaseous emissions.

**NOx** is contained upstream through combustion control techniques. To date, however, technologies for the abatement of NOx from post-combustion emissions have not yet been successfully implemented in steel making plants with electric arc furnaces, despite the wide availability of such technologies applied to plants, such as fossil fuel boilers, incinerators, etc.

**NOx** formation occurs through several mechanisms.

In the case of an EAF, NOx is formed primarily by thermal dissociation and the successive reaction of nitrogen and oxygen molecules in the combustion air, referred to as "thermal" NOx. The other NOx formation mechanisms, i.e., "fuel NOx" (due to the evolution and reaction of nitrogen compounds in fuels with oxygen) and "prompt NOx" (due to the formation of hydrogen cyanide HCN followed by oxidation to NOx) make minor contributions to NOx emissions from an EAF.

Post-combustion NOx abatement and control systems include:
- selective Catalytic Reduction (SCR);
- non-Selective Catalytic Reduction (NSCR); and
- selective Non-Catalytic Reduction (SNCR).

In greater detail, SCR units utilize a nitrogen-based reagent, such as ammonia (NH3) or urea, to chemically reduce NOx into molecular nitrogen and water vapor. The reagent is injected through a system of injectors into the fume stream, upstream of a catalytic bed or reactor. The exhaust gas mixes with the reactant and enters a reactor module containing the catalyst. Hot combustion gas and the reactant diffuse through the catalyst, in which the reactant selectively reacts with NOx; the reactions occur if fume temperatures are within a specific range. Generally, operating temperatures comprised between 220°C (430°F) and 420°C (800°F) of the gas stream are required in the catalytic bed for the catalytic reduction process to occur efficiently. The reaction between NH3 and NOx is promoted by the presence of excess oxygen (greater than 1%).

Below the optimal temperature range, the catalyst activity is greatly reduced, potentially allowing direct emission of unreacted ammonia (known as "ammonia slip") into the atmosphere. The SCR systems may also be subject to catalyst deactivation over time, due to physical deactivation and/or chemical poisoning.

For an SCR system to effectively reduce NOx emissions, the exhaust gas stream must thus be fed with relatively stable gas flow rates, NOx concentrations, and temperature.

On the other hand, it is known that the operating conditions vary widely during the melting cycle in terms of gas flow rates, temperatures, and NOx concentrations in EAF fume treatment systems, making denox systems inapplicable.

In particular, the SCR system cannot be installed after particulate removal due to low fume temperatures (90°C/195°F to 150°C / 300°F), well outside the effective operating range.

There are currently no known applications of SCR technology to control NOx emissions in steel plants with EAFs. Indeed, NOx abatement (denox) systems are considered technically unfeasible due to the unresolved technical problems outlined above.

Thus, in the reference technical field, the need to abate NOx from the gaseous emissions of a steel plant with an electric arc furnace is still completely unsatisfied.

Patent document CN111112287 and CN110793338 disclose exemplary EAF fume treatment systems comprising denox apparatuses.

### Summary of the invention

Therefore, it is the main object of the present invention to eliminate the drawbacks of the aforementioned prior art either entirely or in part by providing an electric arc furnace steel plant which is equipped with a fume collection and treatment system capable of efficiently abating NOx by means of SCR-type denox apparatus.

It is a further object of the present invention to make available an electric arc furnace steel making plant which is provided with a fume collection and treatment system capable of efficiently abating NOx through SCR-type denox apparatus while being operationally reliable and simple to operate.

It is a further purpose of the present invention to make available a method of collecting and treating the fumes generated by an electric arc furnace steel plant which allows efficiently abating NOx from the emissions generated by the plant itself.

### Brief description of the drawings

The technical features of the invention according to the aforesaid objects may be clearly found in the contents of the claims hereinbelow and the advantages thereof will become more apparent from the following detailed description, given with reference to the accompanying drawings which show one or more embodiments merely given by way of non-limiting example, in which:
- Figure 1 shows a simplified diagram of a steel making plant with an electric arc furnace provided with a traditional fume collection and treatment system; and
- Figure 2 shows a simplified diagram of an electric arc furnace steel making plant provided with a fume collection and treatment system according to a preferred embodiment of the invention.

### Detailed description

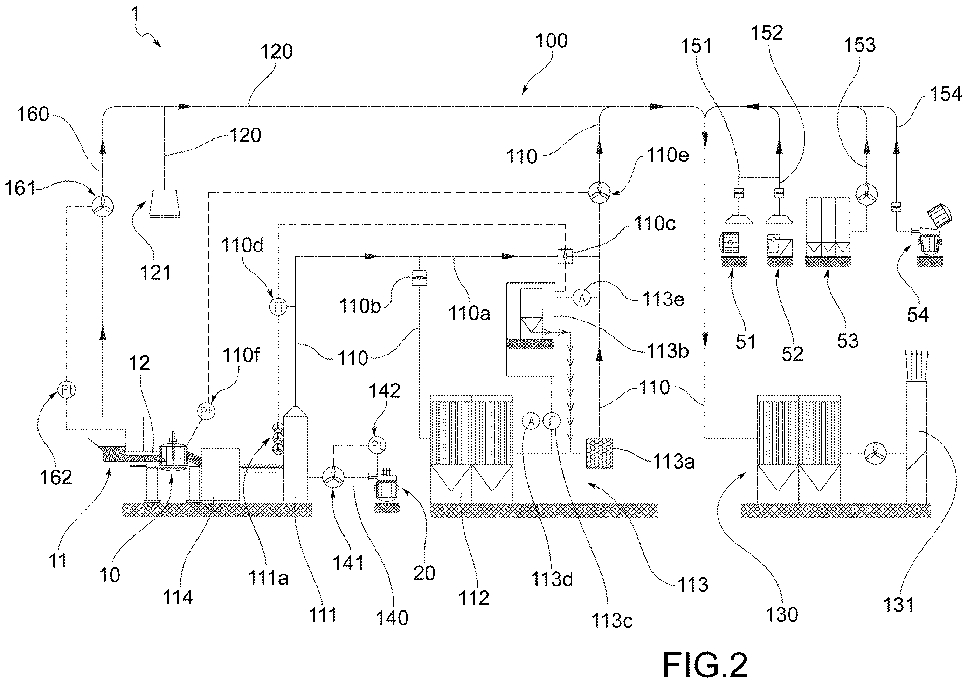

The electric arc furnace steel making plant according to the invention is indicated as a whole by reference numeral 1 in Figure 2.

According to a general embodiment of the invention, the steel making plant 1 comprises at least one electric arc furnace 10 and a fume collection and treatment system 100 suitable to collect and treat gaseous emissions produced by said steel making plant 1.

In this description and the appended claims, the expressions "gaseous emissions," "emissions," or "fumes" are synonymous and, unless expressly stated otherwise, refer generically to gas and dust mixtures generated during the operation of steel making plant 1. The composition of said gaseous emissions varies according to the zone of steel making plant 1. In some zones, said emissions may contain primarily only dust, such as in the dust collecting apparatus of the additive transport systems, the ladle and tundish refractory material demolition and lining areas, or in the slag handling area. In the case of the electric arc furnace, said emissions contain, in addition to dust, combustion products such as nitrogen oxides and sulfur oxides, carbon monoxide and organic pollutants, e.g., such as volatile organic compounds (VOC), chlorinated benzenes, polychlorinated biphenyls (PCB), polycyclic aromatic hydrocarbons (PAH), dioxins (PCDD) and furans (PCDF). The presence of organics in emissions depends mainly on the quality of the feedstock used. On the other hand, in the case of the ladle furnace, said emissions mainly contain only NOx and dust.

According to the aforesaid general embodiment, the fume collection and treatment system 100 comprises:
- a first primary suction line 110 fluidically connected to the electric arc 10 to suck in the fumes generated in said electric arc furnace 10;
- a secondary suction line 120 suitable to ventilate the environment surrounding the electric arc 10 by means of at least one suction hood 121.

Preferably, the electric arc furnace 10 is installed inside a building (not illustrated in the diagram in figure 2). The suction hood 121 is installed near the roof of said building and is used to ventilate the environment surrounding the furnace 10 and delimited by the building.

Furthermore, as shown in figure 2, the fume collection and treatment system 100 comprises at least one filtration apparatus 130 suitable to filter the emissions collected by said fume collection and treatment system 100 before they are discharged into the atmosphere. As shown in Figure 2, the treated fumes may be discharged into the atmosphere through a stack 131.

The aforesaid at least one filtration apparatus 130 may be of any type suited for the purpose. Preferably, the filtration apparatus 130 is a bag filter.

According to the invention, the electric arc furnace 10 is fed by a continuous charging system 11.

By virtue of this contrivance, it is not necessary to open the furnace roof and thus the direct emission of fumes from the electric arc furnace 10 into the surrounding environment is avoided during the charging steps of the electric arc furnace 10. Thus, the air sucked from the secondary suction line 120 through the suction hood 121 is not substantially contaminated by fumes directly from the electric arc furnace 10. Indeed, the fumes remain substantially confined to the furnace 10 and/or the continuous charging system 11, and emissions are limited to only small amounts due to unavoidable leaks. In particular, the air sucked from the secondary suction line 120 contains no NOx or negligible concentrations thereof. Operationally, the NOx generated by the electric arc furnace 10 is thus substantially all sucked from the primary suction line 110.

In particular, the continuous charging system 11 of the electric arc furnace 10 is of the type connectable to a furnace wall 10 or the furnace roof 10.

In particular, the first primary suction line 110 may be fluidically connected to the electric arc furnace 10 through a hole made in the furnace roof 10 or through a material feed channel of the continuous charging system 11.

According to the invention, the following are arranged in sequence along said primary suction line 110 starting from the electric arc furnace 10:
- a fume cooling apparatus 111;
- a dust collecting device 112; and
- a denox selective catalytic reduction (SCR) apparatus 113.

Again according to the invention, the secondary suction line 120 flows into the first primary suction line 110 downstream of the denox selective catalytic reduction 113 and upstream of said at least one filtration apparatus 130.

By virtue of the invention, the fumes collected from the primary suction line 110 are fed to the denox SCR apparatus 113 before said fumes are combined with fumes collected from the secondary suction line 120 and then sent to the filtration apparatus 130. Thus, the fumes sucked from the electric arc furnace 10 are not diluted and cooled with the fumes drawn from the secondary suction line 120. Thus, the denox SCR apparatus can be operated under stable and controllable conditions; in particular, the denox SCR apparatus 113 can treat uncooled fume and undiluted NOx. Thus, it is possible to efficiently abate NOx generated in a steel making plant 1 using a denox SCR apparatus 113.

Furthermore, by virtue of the fact that upstream of the denox SCR apparatus 113, the first primary suction line 110 comprises a fume cooling apparatus 111 and a dust collecting device 112, the fumes collected from the first primary suction line 110 can be preventively:
- cooled to take the temperature of such fume into a predetermined temperature range as a function of the operating requirements of the denox SCR apparatus 113; and
- removed of dust, to prevent an excessively high concentration of dust from damaging the catalytic bed of the denox SCR apparatus 113.

The dust collecting device 112 may be any dust filtration device suited for the purpose and capable of treating the fumes generated by the electric arc furnace 10.

Preferably, said dust collecting device 112 is an electrofilter, also known as an electrostatic precipitator. The electrostatic precipitator is a device without mechanical filtration which removes particles, such as dust and fumes, from a gaseous stream using the force of an electrostatic charge induced on the dust.

Preferably, as shown in figure 2, the denox SCR selective catalytic reduction apparatus 113 comprises:
- a catalytic bed or reactor 113a fluidically connected to the primary suction line 110 to be crossed by the fumes; and
- dosing means 113b of a nitrogen-based reagent (e.g., ammonia and/or urea) suitable to inject a metered amount of said reagent into the section of the primary suction line 110 upstream of the catalytic bed 113a.

In particular, the dosing means 113b are suitable to inject the reagent upstream or downstream of the dust collecting device 112. Preferably, as shown in figure 2, the dosing means 113b are suitable to inject the reagent into the section of the primary suction line 110 between the dust collecting device 112 and the catalytic bed 113a.

Advantageously, the dosing means 113b are controlled by a control system to adjust the dosed amount of the nitrogen-based reagent as a function of:
- the fume flow rate at the inlet to the catalytic bed 113a, as measured by means of at least one flow meter 113c;
- the NOx concentration upstream and/or downstream of the catalytic bed 113a, as detected by one or more gas analyzers 113d and 113e.

The operation of a denox SCR apparatus is well known in itself to a person skilled in the art and will thus not be described in detail.

The denox SCR apparatus uses a nitrogen-based reagent, such as ammonia (NH3) or urea, to chemically reduce NOx nitrogen oxides into molecular nitrogen and water vapor. The reagent is injected into the fume stream either before or after the dust collecting device 112, upstream of the catalytic bed. The reagent flow is automatically controlled by the automation/control system by means of gas analyzers and flow meters installed in the fume streams, which make it possible to measure the amount of pollutants and the reagent "slip".

Advantageously, the catalyst with nitrogen-based reagent injection abates down NOx, but it also can chemically reduce dioxins, furans, and carbon monoxide CO. By virtue of this capacity, it is possible to avoid the insertion in the fume collection and treatment system of an injection apparatus of adsorbing materials (e.g. activated carbon, pulverized activated lignite coke or mixtures of these with lime, clay) traditionally provided in the known fume collection and treatment systems to abate dioxins and furans and CO from the fumes. The elimination of the adsorbent injection apparatus leads to a reduction in operating costs for material injected and for the amount of dust produced and collected in the filtration apparatus 130.

Operationally, the choice was made to abate NOx through denox SCR systems and not through Non-Selective Catalytic Reduction (NSCR) denox systems for the following reasons.

In NSCR non-selective catalytic reduction systems, CO, NOx and hydrocarbons are converted to CO2 and N2 through a catalyst. This technique does not require the injection of additional reagents because unburned hydrocarbons are used as reducing agents. However, the gases must have very low oxygen contents. NOx removal occurs in two sequential steps: - in step 1, the reactions remove excess oxygen, because the latter reacts better with CO and hydrocarbons than with NOx; - in step 2, the hydrocarbons react with the NOX in the mixture, reducing them. This is why the concentration of oxygen in the fume must be very low, in particular below 0.5%. Therefore, NSCR systems can only be used with fuel-rich, oxygen-poor mixtures. However, said limitation does not apply to denox SCR systems, which can thus also treat oxygen-rich mixtures, such as those that characterize the fumes extracted from an electric arc furnace.

Preferably, as shown in Figure 2, the first primary suction line 110 comprises at least one fan 110e, the actuation of which is controlled by a control system to modulate the suction capacity as a function of the pressure inside the electric arc furnace 10 as measured by at least one pressure sensor 110f.

The production of steel in an EAF is a discontinuous process in which melting steps alternate with molten steel tapping and/or charging steps. During the tapping steps, the fumes generated by the electric arc furnace are cold and the production of NOx emissions is essentially negligible. If the fumes captured during the tapping steps were conveyed to the denox SCR apparatus, they could cool the catalytic bed below the operating temperature and damage the system.

For this reason, the first primary suction line 110 comprises a by-pass line 110a, which fluidically connects the section of the first primary suction line 110 upstream of the denox selective catalytic reduction 113 with the section of the first primary suction line 110 downstream of the denox SCR apparatus 113.

In particular, as shown in Figure 2, the by-pass line 110a fluidically connects the section of the first primary suction line 110 comprised between the fume cooling apparatus 111 and the dust collecting device 112 to the section of the first primary suction line 110 comprised between the denox selective catalytic reduction apparatus 113 and the filtration apparatus 130.

The first primary suction line 110 is provided with one or more by-pass valves 110b, 110c, which are suitable to adjust the passage of fumes through the by-pass 110a, and the actuation of which is controlled by a control system as a function of the temperature of the fumes coming out from the fume cooling apparatus 111, measured by at least one temperature sensor 110d.

Operationally, when the temperature sensor 110d detects a temperature of the fume coming out from the cooling apparatus 111 below a predetermined value, said one or more by-pass valves 110b, 110c are actuated to allow the fumes to pass through the by-pass line 110a, preventing passage through the catalytic bed 113a at the same time.

The melting process in an EAF generates significant amounts of carbon monoxide CO. For such reason, a fume post-combustion chamber 114 is preferably arranged upstream of the fume cooling apparatus 111 in the aforesaid first primary suction line 110. In said post-combustion chamber it is possible to burn CO and significantly reduce its concentration in the fumes.

Advantageously, the fume cooling apparatus 111 is suitable to generate an adjustable cooling capacity such that the fume exiting said apparatus 111 has a temperature within a predetermined temperature range as a function of the operating requirements of the denox SCR apparatus 113. Typically, the operating requirements of the denox SCR apparatus 113 may require a fume temperature range comprised between 220°C and 350°C.

Preferably, the fume cooling apparatus 111 is feedback-controlled by a control system as a function of the temperature of the fume exiting the apparatus 111 as measured by at least one temperature sensor 110d.

According to a preferred embodiment, the aforesaid fume cooling apparatus 111 may comprise a shell and tube exchanger and a plurality of fans 111a, the actuation of which is controlled by the control system to modulate the cooling air flow rate over the shell and tube exchanger as a function of the cooling capacity required by the fume cooling apparatus 111.

Alternatively, said fume cooling apparatus 111 may comprise a water cooling tower. However, the shell-and-tube heat exchanger system is preferable to the cooling tower because it avoids the introduction of water into the fumes.

As shown in Figure 2, the steel making plant 1 may comprise at least one ladle furnace (LF) 20. In this case, the fume collection and treatment system 100 comprises a second primary suction line 140 which:
- is fluidically connected to ladle furnace 20 to suck in fumes generated in said ladle furnace 20; and
- flows into the primary suction line 110 either upstream of the fume cooling apparatus 111 or at the fume cooling apparatus 111.

As mentioned above, the emissions generated by a ladle furnace contain NOx. The fumes sucked from said second primary suction line 140 may be combined with the fumes collected from the first primary suction line 110 and then be treated together in the denox SCR apparatus 113.

However, the fumes generated by ladle furnace 20 and sucked in by said second primary suction line 140 are too cold to be efficiently treated in a denox SCR apparatus. For this reason, they are combined with the fumes generated by the electric arc furnace 10 so as to be heated.

Due to the high temperatures of the fumes generated by the electric arc furnace 10 (further elevated by the eventual post-combustion), the mixture of the two fume streams (from EAF 10 and from LF 20) is still too hot for the denox SCR apparatus. For this reason, the fumes sucked in from said second primary suction line 140 are joined to the fumes sucked in from the first primary suction line 110 upstream of the fumes cooling apparatus 111, to make it possible to effectively control the temperature thereof.

Preferably, the second primary suction line 140 comprises at least one fan 141 the actuation of which is controlled by a control system as a function of the pressure inside the ladle furnace 20 as measured by at least one pressure sensor 142.

As shown in Figure 2, the steel making plant 1 may comprise one or more auxiliary stations 51, 52, 53, 54 which are suitable to operationally support the steel production activity and are likely to generate emissions containing primarily dust. For example, such stations may be the refractory material demolition and lining zones of the ladle 51 and the tundish 52, a dust collecting zone 53 of the additive conveying system, or a slag handling zone 54. In this case, the aforesaid fume collection and treatment system 100 comprises for each auxiliary station 51, 52, 53, 54 an auxiliary suction line 151, 152, 153, 154 which is fluidically connected to the respective auxiliary station to suck the emissions generated by said station and flows, either directly or indirectly, into the secondary suction line 120 or into the first primary suction line 110 in the section between the denox selective catalytic reduction apparatus 113 and the filtration apparatus 130.

The connection zone between continuous charging system 11 of the furnace and the electric arc furnace 10, being a connection between two moving parts, cannot be closed mechanically and is thus a source of spurious air inputs into the furnace, resulting in increased production of nitrogen oxides from the furnace.

Advantageously, as diagrammatically shown in figure 2, the steel making plant 1 may comprise a containment casing 12 suitable to enclose the connection zone between the continuous charging system 11 and the electric arc furnace 10. In such a case, the aforesaid fume collection and treatment system 100 comprises a sealing suction line 160 which is fluidically connected to said containment casing 12 to suck in air that infiltrates inside said containment casing 12. Said sealing suction line 160 flows into secondary suction line 120 or directly into primary suction line 110 in the section comprised between the denox SCR apparatus 113 and the filtration apparatus 130.

Preferably, the sealing suction line 160 comprises at least one fan 161 the actuation of which is controlled as a function of the pressure within the containment casing 12 as measured by at least one pressure sensor 162.

Said sealing system of the connection zone between the furnace and the charging system can be defined as "active" because the suction capacity is regulated based on the pressure measured in the charging zone of the furnace, guaranteeing the correct degree of suction with reference to the operating pressure in the furnace.

It is an object of the present invention to provide a method for collecting and treating the fumes generated by a steel making plant.

The method according to the invention applies to a steel making plant with an electric arc furnace, in particular, such as the one which is the object of the present invention and in particular as described above. For this reason, the method is described below using the same reference numerals used to describe steel making plant 1.

In general, the steel making plant 1 comprises at least one electric arc furnace 10 and a fume collection and treatment system 100 suitable to collect and treat gaseous emissions produced by said steel making plant 1.

The aforesaid fume collection and treatment system 100 comprises:
- a first primary suction line 110 fluidically connected to the electric arc 10 to suck in the fumes generated in said electric arc furnace 10;
- a secondary suction line 120 suitable to ventilate the environment surrounding the electric arc 10 by means of at least one suction hood 121; and
- at least one filtration apparatus 130 suitable to filter the emissions collected by said fume collection and treatment 100 before they are discharged into the atmosphere.

The method according to the invention is characterized in that:
- it prevents the direct emission of fumes into the environment from the electric arc furnace 10 during furnace charging steps 10 by virtue of a continuous charging system 11 so that the air sucked by the secondary suction line 120 is substantially uncontaminated by fumes coming directly from the electric arc furnace 10; and
- it treats the fumes collected by the first primary suction line 110 in a denox selective catalytic reduction apparatus 113 before sending them to the filtration apparatus 130 together with the fumes collected by the secondary suction line 120, so as not to dilute and cool the fumes sucked from the electric arc furnace 10 with the fumes sucked by the secondary suction line 120 before treating them in the denox apparatus 113.

Furthermore, according to the invention, before treating the fumes collected by the first primary suction line 110 in the denox catalytic reduction apparatus 113 said fumes are freed from dust in a dust collecting device 112 and are cooled in a fume cooling apparatus 111, to take the temperature of said fumes within a predetermined temperature range as a function of the operating requirements of the denox apparatus 113.

Preferably, during tapping phases of the molten steel from the electric arc furnace 10 the fumes collected by the first primary suction line 110 are sent to the filtration apparatus 130 by-passing the denox selective catalytic reduction apparatus 113, so as not to send to the denox selective catalytic reduction apparatus 113 cold fumes having temperatures below a predetermined temperature range as a function of the operating requirements of the denox apparatus 113.

Preferably, said steel making plant 1 comprises at least one ladle furnace 20. Said fume collection and treatment system 100 comprises a second primary suction line 140 which is fluidically connected to said ladle furnace 20 to suck in fume generated in said ladle furnace 20. The fumes collected by said second primary suction line 140 are combined with fumes collected by said first primary suction line 110 before cooling them in the fume cooling apparatus 111.

Preferably, the aforesaid steel making plant 1 may comprise one or more auxiliary stations 51, 52, 53, 54 which are intended to operationally support the steel production activity and are likely to generate emissions containing primarily dust. The fume collection and treatment system 100 comprises for each auxiliary station 51, 52, 53, 54 an auxiliary suction line 151, 152, 153, 154 which is fluidically connected to the respective auxiliary station to suck in emissions generated by said station. The emissions collected from each auxiliary suction line 151, 152, 153, 154 are sent directly to the filtration apparatus 130.

The invention provides numerous advantages, some of which have already been described.

The electric arc furnace steel plant 1 according to the invention is provided with a fume collection and treatment system capable of efficiently abating NOx by means of SCR-type denox apparatuses.

The steel making plant 1 with an electric arc furnace according to the invention is provided with a fume collection and treatment system capable of efficiently abating NOx by means of SCR-type denox apparatus, and is at the same time operationally reliable and simple to operate.

The method of collecting and treating the fumes generated by a steel making plant with an electric arc furnace makes it possible to efficiently abate NOx from the emissions generated by the plant itself.

Therefore, the invention thus devised achieves the set objects.

Obviously, in the practice, it may also take shapes and configurations different from the one disclosed above, without because of this departing from the present scope of protection, defined by the appended claims.

Furthermore, all details may be replaced by technically equivalent elements, and any size, shape, and material may be used according to needs.

## Claims

1. A steel making plant (1) comprising at least one electric arc furnace (10) and a fume collection and treatment system (100) suitable for collecting and treating the gaseous emissions produced by said steel making plant (1), wherein said fume collection and treatment system (100) comprises:
- a first primary suction line (110) fluidically connected to the electric arc furnace (10) to suck the fumes generated in said electric arc furnace (10);
- a secondary suction line (120) suitable for ventilating the environment surrounding the electric arc furnace (10) by means of at least one suction hood (121); and
- at least one filtration apparatus (130) suitable for filtering the emissions collected by said fume collection and treatment system (100) before their discharge into the atmosphere,
**characterised in that** the electric arc furnace (10) is fed by a continuous charging system (11) and **in that** along said first primary suction line (110), starting from the electric arc furnace (10) a fume cooling apparatus (111), a dust collecting device (112) and a denox selective catalytic reduction apparatus (113) are arranged in sequence, and **in that** the secondary suction line (120) flows into the first primary suction line (110) downstream of the denox selective catalytic reduction apparatus (113) and upstream of said at least one filtration apparatus (130),
wherein the first primary suction line (110) comprises a by-pass line (110a) fluidically connecting the section of the first primary suction line (110) upstream of the denox selective catalytic reduction apparatus (113) with the section of the first primary suction line (110) downstream of the denox selective catalytic reduction apparatus (113),
wherein the first primary suction line (110) is provided with one or more by-pass valves (110b, 110c), which are suitable for regulating the passage of fumes through the by-pass duct (110a), the actuation of which is controlled by a control system depending onto the temperature of the fumes coming out from the fume cooling apparatus (111), measured by at least one temperature sensor (110d).

2. The steel making plant (1) according to claim 1, wherein the by-pass line (110a) fluidically connects the section of the first primary suction line (110) comprised between the fume cooling apparatus (111) and the dust collecting device (112) with the section of the first primary suction line (110) comprised between the denox selective catalytic reduction apparatus (113) and the filtration apparatus (130).

3. The steel making plant (1) according to any of the previous claims, wherein the denox selective catalytic reduction apparatus (113) comprises: - a catalytic bed (113a) fluidically connected to the first primary suction line (110) for the fumes to pass through; and - means (113b) for dosing a nitrogen-based reagent suitable to inject a dosed amount of said reagent into the section of the first primary suction line (110) upstream of the catalytic bed (113a).

4. The steel making plant (1) according to claim 3, wherein the dosing means (113b) are controlled by a control system to adjust the dosed amount of the nitrogen-based reagent depending on: - the flow rate of the fumes entering the catalytic bed (113a), measured by at least one flowmeter (113c); - the NOx concentration upstream and/or downstream of the catalytic bed (113a), measured by at least one gas analyser (113d, 113e).

5. The steel making plant (1) according to any of the preceding claims, wherein said fume cooling apparatus (111) is suitable to generate an adjustable cooling capacity such that the fumes coming out from said apparatus (111) have a temperature within a predefined temperature range according to the operating requirements of said denox apparatus (113), wherein preferably said fume cooling apparatus (111) is feedback-controlled by a control system depending on the temperature of the fumes coming out from said apparatus (111), measured by at least one temperature sensor (110d).

6. The steel making plant (1) according to claim 5, wherein said fume cooling apparatus (111) comprises a shell and tube exchanger and a plurality of fans (111a), the actuation of which is controlled by the control system so as to modulate the cooling air flow rate over the shell and tube exchanger according to the cooling capacity required by the fume cooling apparatus (111).

7. The steel making plant (1) according to any of the preceding claims, comprising at least one ladle furnace (20), wherein said fume collection and treatment system (100) comprises a second primary suction line (140) which is fluidically connected to the ladle furnace (20) to suck the fumes generated in said ladle furnace (20) and flows into the first primary suction line (110) upstream of or at the fume cooling apparatus (111), and wherein preferably the second primary suction line (140) comprises at least one fan (141) the actuation of which is controlled by a control system depending on the pressure inside the ladle furnace (20), measured by at least one pressure sensor (142).

8. The steel making plant (1) according to any of the preceding claims, comprising one or more auxiliary stations (51, 52, 53, 54) which are suitable for operationally supporting the steel production activity and are susceptible to generate emissions containing mainly dust, wherein said fume collection and treatment system (100) comprises for each auxiliary station (51, 52, 53, 54) an auxiliary suction line (151, 152, 153, 154) which is fluidically connected to the respective auxiliary station to suck the emissions generated by said station and flows, directly or indirectly, into the secondary suction line (120) or into the first primary suction line (110) in the section between the denox selective catalytic reduction apparatus (113) and the filtration apparatus (130).

9. The steel making plant (1) according to any of the preceding claims, wherein in said primary suction line (110) a fume post-combustion chamber (114) is placed upstream of the fume cooling apparatus (111).

10. The steel making plant (1) according to any of the preceding claims, wherein the first primary suction line (110) is fluidically connected to the electric arc furnace (10) through a hole made in the furnace roof (10) or through a material feed channel of the continuous charging system (11).

11. The steel making plant (1) according to any of the preceding claims, wherein the continuous charging system (11) of the electric arc furnace (10) is of the type connectable to a furnace wall (10) or to the furnace roof (10).

12. The steel making plant (1) according to any of the preceding claims, comprising a containment casing (12) suitable to close a connection zone between the continuous charging system (11) and the electric arc furnace (10), wherein said fume collection and treatment system (100) comprises a sealing suction line (160) which is fluidically connected to said containment casing (12) to suck air infiltrating inside said containment casing (12), said sealing suction line (160) flowing into the secondary suction line (120) or directly into the first primary suction line (110) in the section between the denox apparatus (113) and the filtration apparatus (130), wherein preferably the sealing suction line (160) comprises at least one fan (161) the actuation of which is controlled depending on the pressure inside the containment casing (12), measured by at least one pressure sensor (162).

13. The steel making plant (1) according to any of the preceding claims, wherein said de-dusting device (112) is an electric filter.

14. The steel making plant (1) according to any of the preceding claims, wherein said at least one filtration apparatus (130) is a bag filter.

15. A method of collecting and treating fumes generated by a steel making plant (1) comprising at least one electric arc furnace (10) and a fume collection and treatment system (100) suitable for collecting and treating gaseous emissions produced by said steel making plant (1), wherein said fume collection and treatment system (100) comprises:
- a first primary suction line (110) fluidically connected to the electric arc furnace (10) to suck the fumes generated in said electric arc furnace (10);
- a secondary suction line (120) suitable for ventilating the environment surrounding the electric arc furnace (10) by means of at least one suction hood (121); and
- at least one filtration apparatus (130) suitable for filtering the emissions collected by said fume collection and treatment system (100) before their discharge into the atmosphere,
**said method being characterised by:**
- preventing the direct emission of fumes into the environment from the electric arc furnace (10) during furnace charging phases (10) by means of a continuous charging system (11) so that the air sucked by the secondary suction line (120) is substantially uncontaminated by fumes coming directly from the electric arc furnace (10); and
- treating the fumes collected by the first primary suction line (110) in a denox selective catalytic reduction apparatus (113) before sending them to the filtration apparatus (130) together with the fumes collected by the secondary suction line (120), so as not to dilute and cool the fumes sucked from the electric arc furnace (10) with the fumes sucked by the secondary suction line (120) before treating them in the denox apparatus (113),
wherein prior to treating the fumes collected by the first primary suction line (110) in the denox catalytic reduction apparatus (113) said fumes are freed from dust in a dust collecting device (112) and are cooled in a fume cooling apparatus (111), so as to bring the temperature of said fumes within a predefined temperature range according to the operating requirements of the denox apparatus (113)
wherein during tapping phases of the molten steel from the electric arc furnace (10) the fumes collected by the first primary suction line (110) are sent to the filtration apparatus (130) by-passing the denox selective catalytic reduction apparatus (113), so as not to send to the denox selective catalytic reduction apparatus (113) cold fumes having temperatures below a predefined temperature range according to the operating requirements of the denox apparatus (113).

16. The method according to claim 15, wherein said steel making plant (1) comprises at least one ladle furnace (20) and wherein said fume collection and treatment system (100) comprises a second primary suction line (140) which is fluidically connected to said ladle furnace (20) to suck the fumes generated in said ladle furnace (20), wherein the fumes collected by said second primary suction line (140) are combined with the fumes collected by said first primary suction line (110) before cooling them in the fume cooling apparatus (111).

17. The method according to claim 15 or 16, wherein said steel making plant (1) comprises one or more auxiliary stations (51, 52, 53, 54) which are suitable to operationally support the steel production activity and are susceptible to generate emissions containing mainly dust, wherein said fume collection and treatment system (100) comprises for each auxiliary station (51, 52, 53, 54) an auxiliary suction line (151, 152, 153, 154) which is fluidically connected to the respective auxiliary station to suck the emissions generated by said station, wherein the emissions collected by each auxiliary suction line (151, 152, 153, 154) are sent directly to the filtration apparatus (130).

## Patentansprüche

1. Stahlwerk (1), umfassend mindestens einen Elektrolichtbogenofen (10) und ein Abgassammel- und -Behandlungssystem (100), das geeignet ist die gasförmigen Emissionen, die von dem Stahlwerk (1) erzeugt werden, zu sammeln und zu behandeln, wobei das Abgassammel- und -Behandlungssystem (100) umfasst:
- eine erste primäre Absaugleitung (110), die fluidisch mit dem Elektrolichtbogenofen (10) verbunden ist, um die Abgase, die in dem Elektrolichtbogenofen (10) erzeugt werden, abzusaugen;
- eine sekundäre Absaugleitung (120), die geeignet ist, die Umgebung des Elektrolichtbogenofens (10) mittels mindestens einer Absaughaube (121) zu belüften; und
- mindestens eine Filtrationsvorrichtung (130) die geeignet ist, die Emissionen, die durch das Abgassammel- und -Behandlungssystem (100) gesammelt wurden, zu filtrieren, vor dem Auslass in die Atmosphäre,
**dadurch gekennzeichnet, dass** der Elektrolichtbogenofen (10) durch ein kontinuierliches Beschickungssystem (11) beschickt wird und dass entlang der ersten primären Absaugleitung (110), ausgehend von dem Elektrolichtbogenofen (10), eine Abgaskühlvorrichtung (111), eine Staubsammelvorrichtung (112) und eine selektive katalytische Denox-Reduzierungsvorrichtung (113) in Reihe angeordnet sind, und dass die sekundäre Absaugleitung (120) in die erste primäre Absaugleitung (110) stromabwärts der selektiven katalytischen Denox-Reduzierungsvorrichtung (113) und stromaufwärts der mindestens einen Filtrationsvorrichtung (130) mündet,
wobei die erste primäre Absaugleitung (110) eine Bypasslinie (110a) umfasst, die den Abschnitt der ersten primären Absaugleitung (110) stromaufwärts der selektiven katalytischen Denox-Reduzierungsvorrichtung (113) fluidisch mit dem Abschnitt der ersten primären Absaugleitung (110) stromabwärts der selektiven katalytischen Denox-Reduzierungsvorrichtung (113) verbindet,
wobei die erste primäre Absaugleitung (110) mit einem oder mehreren Bypass-Ventilen (110b, 110c) versehen ist, die geeignet sind, den Durchgang der Abgase durch die Bypass-Leitung (110a) zu regeln, dessen Betätigung durch ein Steuersystem in Abhängigkeit von der Temperatur der Abgase, die aus der Abgaskühlvorrichtung (111) austreten, gesteuert wird, wobei die Temperatur durch mindestens einen Temperatursensor (110d) gemessen wird.

2. Stahlwerk (1) nach Anspruch 1, wobei die Bypass-Linie (110a) fluidisch den Abschnitt der ersten primären Absaugleitung (110), der sich zwischen der Abgaskühlvorrichtung (111) und der Staubsammelvorrichtung (112) befindet, mit dem Abschnitt der ersten primären Absaugleitung (110) verbindet, der sich zwischen der selektiven katalytischen Denox-Reduzierungsvorrichtung (113) und der Filtrationsvorrichtung (130) befindet, verbindet.

3. Stahlwerk (1) nach einem der vorhergehenden Ansprüche, wobei die selektive katalytische Denox-Reduzierungsvorrichtung (113) umfasst: ein katalytisches Bett (113a), das fluidisch mit der ersten primären Absaugleitung (110) verbunden ist, sodass die Abgase hindurchströmen; und - Mittel (113b) zur Dosierung eines stickstoffbasierten Reagenzes, die geeignet sind, eine dosierte Menge des Reagenzes in den Abschnitt der ersten primären Absaugleitung (110) stromaufwärts des katalytischen Betts (113a) zu spritzen.

4. Stahlwerk (1) nach Anspruch 3, wobei die Dosiermittel (113b) von einem Steuersystem gesteuert werden, um die dosierte Menge des stickstoffbasierten Reagenzes in Abhängigkeit von: - der Strömungsrate der Abgase, die in das katalytische Bett (113a) eintreten, die durch mindestens ein Durchflussmesser (113c) gemessen wird; - der NOx-Konzentration stromaufwärts und/oder stromabwärts des katalytischen Bettes (113a), die durch mindestens einen Gasanalysator (113d, 113e) gemessen wird, anzupassen.

5. Stahlwerk (1) nach einem der vorhergehenden Ansprüche, wobei die Abgaskühlvorrichtung (111) geeignet ist, eine einstellbare Kühlleistung zu erzeugen, so dass die Abgase, die aus der Vorrichtung (111) austreten, eine Temperatur innerhalb eines vordefinierten Temperaturbereichs nach den Betriebsanforderungen der Denox-Vorrichtung (113) aufweisen, wobei vorzugsweise die Abgaskühlvorrichtung (111) durch ein Steuersystem in Abhängigkeit von der Temperatur der Abgase, die aus der Vorrichtung (111) austreten, Rückkopplung-gesteuert wird, wobei die Temperatur durch mindestens einen Temperatursensor (110d) gemessen wird.

6. Stahlwerk (1) nach Anspruch 5, wobei die Abgaskühlvorrichtung (111) einen Rohrbündelwärmetauscher und eine Mehrzahl von Lüfter (111a) umfasst, deren Betätigung durch das Steuersystem gesteuert wird, um die Kühlluft-Durchflussmenge über den Rohrbündelwärmetauscher nach der Kühlleistung, die von der Abgaskühlvorrichtung (111) gefordert wird, zu modulieren.

7. Stahlwerk (1) nach einem der vorhergehenden Ansprüche, umfassend mindestens einen Pfannenofen (20), wobei das Abgassammel- und -Behandlungssystem (100) eine zweite primäre Absaugleitung (140) umfasst, die fluidisch mit dem Pfannenofen (20) verbunden ist, um die Abgase, die in dem Pfannenofen (20) erzeugt werden, abzusaugen und in die erste primäre Absaugleitung (110) stromaufwärts der oder an der Abgaskühlvorrichtung (111) mündet, wobei vorzugsweise die zweite primäre Absaugleitung (140) mindestens einen Lüfter (141) umfasst, dessen Betätigung durch ein Steuersystem in Abhängigkeit von dem Druck in dem Pfannenofen (20), der durch mindestens einen Drucksensor (142) gemessen wird, gesteuert wird.

8. Stahlwerk (1) nach einem der vorhergehenden Ansprüche, umfassend eine oder mehrere Hilfsstationen (51, 52, 53, 54), die geeignet sind, die Stahlproduktionstätigkeit operativ zu unterstützen und die dafür anfällig ist, Emissionen zu erzeugen die hauptsächlich Staub enthalten, wobei das Abgassammel- und Behandlungssystem (100) für jede Hilfsstation (51, 52, 53, 54) eine Hilfsabsaugleitung (151, 152, 153, 154) umfasst, die fluidisch mit der jeweiligen Hilfsstation verbunden ist, um die Emissionen, die von der Station erzeugt werden, abzusaugen, und direkt oder indirekt in die sekundäre Absaugleitung (120) oder in die erste primäre Absaugleitung (110) in dem Abschnitt zwischen der selektiven katalytischen Denox-Reduzierungsvorrichtung (113) und der Filtrationsvorrichtung (130) mündet.

9. Stahlwerk (1) nach einem der vorhergehenden Ansprüche, wobei in der primären Absaugleitung (110) eine Abgas-Nachverbrennungskammer (114) stromaufwärts der Abgaskühlvorrichtung (111) angeordnet ist.

10. Stahlwerk (1) nach einem der vorhergehenden Ansprüche, wobei die erste primäre Absaugleitung (110) fluidisch mit dem Elektrolichtbogenofen (10) durch eine Bohrung, die in dem Ofendach (10) hergestellt wird oder durch einen Materialzuführungskanal des kontinuierlichen Beschickungssystems (11) verbunden ist.

11. Stahlwerk (1) nach einem der vorhergehenden Ansprüche, wobei das kontinuierliche Beschickungssystem (11) des Elektrolichtbogenofens (10) von dem Typ ist, der mit einer Ofenwand (10) oder mit dem Ofendach (10) verbindbar ist.

12. Stahlwerk (1) nach einem der vorhergehenden Ansprüche, umfassend ein Aufnahmegehäuse (12), das geeignet ist, einen Verbindungsbereich zwischen dem kontinuierlichen Beschickungssystem (11) und dem Elektrolichtbogenofen (10) abzudecken, wobei das Abgassammel- und -Behandlungssystem (100) eine Dichtabsaugleitung (160) umfasst, die fluidisch mit dem Aufnahmegehäuse (12) verbunden ist, um Luft abzusaugen, die in das Aufnahmegehäuse (12) eindringt, wobei die Dichtabsaugleitung (160) in die sekundäre Absaugleitung (120) oder direkt in die erste primäre Absaugleitung (110) in dem Abschnitt zwischen der Denox-Vorrichtung (113) und der Filtrationsvorrichtung (130) mündet, wobei vorzugsweise die Dichtabsaugleitung (160) mindestens einen Lüfter (161) umfasst, dessen Betätigung in Abhängigkeit von dem Druck in dem Aufnahmegehäuse (12), der durch mindestens einen Drucksensor (162) gemessen wird, gesteuert wird.

13. Stahlwerk (1) nach einem der vorhergehenden Ansprüche, wobei die Staubentfernungsvorrichtung (112) ein Elektrofilter ist.

14. Stahlwerk (1) nach einem der vorhergehenden Ansprüche, wobei die mindestens eine Filtrationsvorrichtung (130) ein Beutelfilter ist.

15. Verfahren zum Sammeln und Behandeln von Abgasen, die von einer Stahlwerk (1) erzeugt werden, umfassend mindestens einen Elektrolichtbogenofen (10) und ein Abgassammel- und Behandlungssystem (100), das geeignet ist, gasförmige Emissionen, die von dem Stahlwerk (1) erzeugt werden, zu sammeln und zu behandeln, wobei das Abgassammel- und Behandlungssystem (100) umfasst:
eine erste primäre Absaugleitung (110), die fluidisch mit dem Elektrolichtbogenofen (10), um die Abgase die in dem Elektrolichtbogenofen (10) erzeugt werden, abzusaugen;
- eine sekundäre Absaugleitung (120), die geeignet ist, die Umgebung des Elektrolichtbogenofens (10) mittels mindestens einer Absaughaube (121) zu belüften; und
- mindestens eine Filtrationsvorrichtung (130), die geeignet ist, die Emissionen, die durch das Abgassammel- und Behandlungssystem (100) gesammelt werden, zu filtrieren, vor dem Auslass in die Atmosphäre,
wobei das Verfahren **dadurch gekennzeichnet ist, dass**:
- Entfernen der direkten Emission von Abgasen in die Umgebung von dem Elektrolichtbogenofen (10) während der Ofenbeschickungsphasen (10) durch ein kontinuierliches Beschickungssystem (11), sodass die Luft, die von der sekundären Absaugleitung (120) angesaugt wird, im Wesentlichen frei von Abgasen ist, die direkt aus dem Elektrolichtbogenofen (10) austreten; und
- Behandeln der Abgase, die durch die erste primäre Absaugleitung (110) gesammelt werden, in einer selektiven katalytischen Denox-Reduzierungsvorrichtung (113), bevor sie zusammen mit den Abgasen, die durch die sekundäre Absaugleitung (120) gesammelt werden, der Filtrationsvorrichtung (130) geliefert werden, sodass die Abgase, die von dem Elektrolichtbogenofen (10) abgesaugt werden, nicht mit den Abgasen, die durch die sekundäre Absaugleitung (120) abgesaugt werden, verdünnt und abgekühlt werden, bevor sie in der Denox-Vorrichtung (113) behandelt werden,
wobei vor der Behandlung der Abgase, die durch die erste primäre Absaugleitung (110) gesammelt werden, in der Denox-Reduzierungsvorrichtung (113) die Abgase in einer Staubentfernungsvorrichtung (112) von Staub befreit werden und in einer Abgaskühlvorrichtung (111) gekühlt werden, sodass die Temperatur der Abgase innerhalb eines vordefinierten Temperaturbereichs nach den Betriebsanforderungen der Denox-Vorrichtung (113) gebracht wird,
wobei während der Anzapfenphasen des flüssigen Stahls aus dem Elektrolichtbogenofen (10) die Abgase, die durch die erste primäre Absaugleitung (110) gesammelt werden unter Umgehung der selektiven katalytischen Denox-Reduzierungsvorrichtung (113) zu der Filtrationsvorrichtung (130) geleitet werden, um keine kalten Abgase mit Temperaturen unterhalb eines vordefinierten Temperaturbereichs nach den Betriebsanforderungen der Denox-Vorrichtung (113) in die selektive katalytische Denox-Reduzierungsvorrichtung (113) zu leiten.

16. Verfahren nach Anspruch 15, wobei das Stahlwerk (1) mindestens einen Pfannenofen (20) umfasst und wobei das Abgassammel- und Behandlungssystem (100) eine zweite primäre Absaugleitung (140) umfasst, die fluidisch mit dem Pfannenofen (20) verbunden ist, um die Abgase, die in dem Pfannenofen (20) erzeugt werden, abzusaugen, wobei die Abgase, die durch die zweite primäre Absaugleitung (140) gesammelt werden mit den Abgasen, die durch die erste primäre Absaugleitung (110) gesammelt werden, kombiniert werden, bevor sie in der Abgaskühlvorrichtung (111) gekühlt werden.

17. Verfahren nach Anspruch 15 oder 16, wobei das Stahlwerk (1) eine oder mehrere Hilfsstationen (51, 52, 53, 54) umfasst, die geeignet sind, die Stahlproduktionstätigkeit operativ zu unterstützen und die darauf anfällig sind, Emissionen zu erzeugen. Die hauptsächlich Staub enthalten, wobei das Abgassammel- und Behandlungssystem (100) für jede Hilfsstation (51, 52, 53, 54) eine Hilfsabsaugleitung (151, 152, 153, 154) umfasst, die fluidisch mit der jeweiligen Hilfsstation verbunden ist, um die Emissionen, die von der Station erzeugt werden, abzusaugen, wobei die Emissionen, die durch jede Hilfsabsaugleitung (151, 152, 153, 154) gesammelt werden, direkt zu der Filtrationsvorrichtung (130) geleitet werden.

## Revendications

1. Installation sidérurgique (1) comprenant au moins un four à arc électrique (10) et un système de collecte et de traitement des fumées (100) adapté pour collecter et traiter les émissions gazeuses produites par ladite installation sidérurgique (1), dans laquelle ledit système de collecte et de traitement des fumées (100) comprend :
- une première ligne d'aspiration primaire (110) connectée fluidiquement au four à arc électrique (10) pour aspirer les fumées générées dans ledit four à arc électrique (10) ;
- une ligne d'aspiration secondaire (120) adaptée pour ventiler l'environnement entourant le four à arc électrique (10) au moyen d'au moins une hotte d'aspiration (121) ; et
- au moins un appareil de filtration (130) adapté pour filtrer les émissions collectées par ledit système de collecte et de traitement des fumées (100) avant leur rejet dans l'atmosphère,
**caractérisée en ce que** le four à arc électrique (10) est alimenté par un système d'alimentation continue (11) et **en ce que** le long de ladite première ligne d'aspiration primaire (110), à partir du four à arc électrique (10), un appareil de refroidissement des fumées (111), un dispositif de collecte des poussières (112) et un appareil de réduction catalytique sélective denox (113) sont disposés en séquence, et **en ce que** la ligne d'aspiration secondaire (120) se jette dans la première ligne d'aspiration primaire (110) en aval de l'appareil de réduction catalytique sélective denox (113) et en amont dudit au moins un appareil de filtration (130),
dans laquelle la première ligne d'aspiration primaire (110) comprend une ligne de dérivation (110a) connectant fluidiquement la section de la première ligne d'aspiration primaire (110) en amont de l'appareil de réduction catalytique sélective denox (113) avec la section de la première ligne d'aspiration primaire (110) en aval de l'appareil de réduction catalytique sélective denox (113),
dans laquelle la première ligne d'aspiration primaire (110) est pourvue d'une ou plusieurs vannes de dérivation (110b, 110c), qui sont adaptées pour réguler le passage des fumées à travers le conduit de dérivation (110a), dont l'actionnement est contrôlé par un système de commande en fonction de la température des fumées sortant de l'appareil de refroidissement des fumées (111), mesurée par au moins un capteur de température (110d).

2. Installation sidérurgique (1) selon la revendication 1, dans laquelle la ligne de dérivation (110a) connecte fluidiquement la section de la première ligne d'aspiration primaire (110) comprise entre l'appareil de refroidissement des fumées (111) et le dispositif de collecte des poussières (112) avec la section de la première ligne d'aspiration primaire (110) comprise entre l'appareil de réduction catalytique sélective denox (113) et l'appareil de filtration (130).

3. Installation sidérurgique (1) selon l'une quelconque des revendications précédentes, dans laquelle l'appareil de réduction catalytique sélective denox (113) comprend : - un lit catalytique (113a) connecté fluidiquement à la première ligne d'aspiration primaire (110) pour le passage des fumées ; et - des moyens (113b) pour doser un réactif à base d'azote adapté à injecter une quantité dosée dudit réactif dans la section de la première ligne d'aspiration primaire (110) en amont du lit catalytique (113a).

4. Installation sidérurgique (1) selon la revendication 3, dans laquelle les moyens de dosage (113b) sont commandés par un système de commande pour ajuster la quantité dosée du réactif à base d'azote en fonction de : - le débit des fumées entrant dans le lit catalytique (113a), mesuré par au moins un débitmètre (113c) ; - la concentration de NOx en amont et/ou en aval du lit catalytique (113a), mesurée par au moins un analyseur de gaz (113d, 113e).

5. Installation sidérurgique (1) selon l'une quelconque des revendications précédentes, dans laquelle ledit appareil de refroidissement des fumées (111) est adapté pour générer une capacité de refroidissement réglable telle que les fumées sortant dudit appareil (111) aient une température dans une plage de température prédéfinie selon les exigences de fonctionnement dudit appareil denox (113), dans laquelle de préférence ledit appareil de refroidissement des fumées (111) est commandé en boucle fermée par un système de commande en fonction de la température des fumées sortant dudit appareil (111), mesurée par au moins un capteur de température (110d).

6. Installation sidérurgique (1) selon la revendication 5, dans laquelle ledit appareil de refroidissement des fumées (111) comprend un échangeur à calandre et tubes et une pluralité de ventilateurs (111a), dont l'actionnement est contrôlé par le système de commande de manière à moduler le débit d'air de refroidissement sur l'échangeur à calandre et tubes selon la capacité de refroidissement requise par l'appareil de refroidissement des fumées (111).

7. Installation sidérurgique (1) selon l'une quelconque des revendications précédentes, comprenant au moins un four poche (20), dans laquelle ledit système de collecte et de traitement des fumées (100) comprend une seconde ligne d'aspiration primaire (140) qui est connectée fluidiquement au four poche (20) pour aspirer les fumées générées dans ledit four poche (20) et se jette dans la première ligne d'aspiration primaire (110) en amont ou au niveau de l'appareil de refroidissement des fumées (111), et dans laquelle de préférence la seconde ligne d'aspiration primaire (140) comprend au moins un ventilateur (141) dont l'actionnement est contrôlé par un système de commande en fonction de la pression à l'intérieur du four poche (20), mesurée par au moins un capteur de pression (142).

8. Installation sidérurgique (1) selon l'une quelconque des revendications précédentes, comprenant une ou plusieurs stations auxiliaires (51, 52, 53, 54) qui sont adaptées pour soutenir opérationnellement l'activité de production d'acier et sont susceptibles de générer des émissions contenant principalement de la poussière, dans laquelle ledit système de collecte et de traitement des fumées (100) comprend, pour chaque station auxiliaire (51, 52, 53, 54), une ligne d'aspiration auxiliaire (151, 152, 153, 154) qui est connectée fluidiquement à la station auxiliaire respective pour aspirer les émissions générées par ladite station et se jette, directement ou indirectement, dans la ligne d'aspiration secondaire (120) ou dans la première ligne d'aspiration primaire (110) dans la section comprise entre l'appareil de réduction catalytique sélective denox (113) et l'appareil de filtration (130).

9. Installation sidérurgique (1) selon l'une quelconque des revendications précédentes, dans laquelle, dans ladite ligne d'aspiration primaire (110), une chambre de post-combustion des fumées (114) est disposée en amont de l'appareil de refroidissement des fumées (111).

10. Installation sidérurgique (1) selon l'une quelconque des revendications précédentes, dans laquelle la première ligne d'aspiration primaire (110) est connectée fluidiquement au four à arc électrique (10) par un orifice pratiqué dans le toit du four (10) ou par un canal d'alimentation en matériau du système d'alimentation continue (11).

11. Installation sidérurgique (1) selon l'une quelconque des revendications précédentes, dans laquelle le système d'alimentation continue (11) du four à arc électrique (10) est du type pouvant être raccordé à une paroi du four (10) ou au toit du four (10).

12. Installation sidérurgique (1) selon l'une quelconque des revendications précédentes, comprenant un carter de confinement (12) adapté pour fermer une zone de connexion entre le système d'alimentation continue (11) et le four à arc électrique (10), dans laquelle ledit système de collecte et de traitement des fumées (100) comprend une ligne d'aspiration d'étanchéité (160) qui est connectée fluidiquement audit carter de confinement (12) pour aspirer l'air s'infiltrant à l'intérieur dudit carter de confinement (12), ladite ligne d'aspiration d'étanchéité (160) se jetant dans la ligne d'aspiration secondaire (120) ou directement dans la première ligne d'aspiration primaire (110) dans la section comprise entre l'appareil denox (113) et l'appareil de filtration (130), dans laquelle de préférence ladite ligne d'aspiration d'étanchéité (160) comprend au moins un ventilateur (161) dont l'actionnement est commandé en fonction de la pression à l'intérieur du carter de confinement (12), mesurée par au moins un capteur de pression (162).

13. Installation sidérurgique (1) selon l'une quelconque des revendications précédentes, dans laquelle ledit dispositif de dépoussiérage (112) est un filtre électrique.

14. Installation sidérurgique (1) selon l'une quelconque des revendications précédentes, dans laquelle ledit au moins un appareil de filtration (130) est un filtre à manches.

15. Procédé de collecte et de traitement des fumées générées par une installation sidérurgique (1) comprenant au moins un four à arc électrique (10) et un système de collecte et de traitement des fumées (100) adapté pour collecter et traiter les émissions gazeuses produites par ladite installation sidérurgique (1), dans lequel ledit système de collecte et de traitement des fumées (100) comprend :
une première ligne d'aspiration primaire (110) connectée fluidiquement au four à arc électrique (10) pour aspirer les fumées générées dans ledit four à arc électrique (10) ;
- une ligne d'aspiration secondaire (120) adaptée pour ventiler l'environnement entourant le four à arc électrique (10) au moyen d'au moins une hotte d'aspiration (121) ; et
- au moins un appareil de filtration (130) adapté pour filtrer les émissions collectées par ledit système de collecte et de traitement des fumées (100) avant leur rejet dans l'atmosphère,
le procédé étant **caractérisé en ce que** :
l'émission directe de fumées dans l'environnement à partir du four à arc électrique (10) pendant les phases de chargement du four (10) est empêchée au moyen d'un système d'alimentation continue (11) de sorte que l'air aspiré par la ligne d'aspiration secondaire (120) est sensiblement non contaminé par des fumées provenant directement du four à arc électrique (10) ; et
les fumées collectées par la première ligne d'aspiration primaire (110) sont traitées dans un appareil de réduction catalytique sélective denox (113) avant d'être envoyées à l'appareil de filtration (130) conjointement avec les fumées collectées par la ligne d'aspiration secondaire (120), de manière à ne pas diluer et refroidir les fumées aspirées à partir du four à arc électrique (10) avec les fumées aspirées par la ligne d'aspiration secondaire (120) avant leur traitement dans l'appareil denox (113),
dans lequel, avant de traiter les fumées collectées par la première ligne d'aspiration primaire (110) dans l'appareil de réduction catalytique denox (113), lesdites fumées sont débarrassées des poussières dans un dispositif de collecte des poussières (112) et sont refroidies dans un appareil de refroidissement des fumées (111), de manière à amener la température desdites fumées dans une plage de température prédéfinie selon les exigences de fonctionnement de l'appareil denox (113)
dans lequel, pendant les phases de coulée de l'acier fondu à partir du four à arc électrique (10), les fumées collectées par la première ligne d'aspiration primaire (110) sont envoyées à l'appareil de filtration (130) en contournant l'appareil de réduction catalytique sélective denox (113), de manière à ne pas envoyer à l'appareil de réduction catalytique sélective denox (113) des fumées froides ayant des températures inférieures à une plage de température prédéfinie selon les exigences de fonctionnement de l'appareil denox (113).

16. Procédé selon la revendication 15, dans lequel ladite installation sidérurgique (1) comprend au moins un four poche (20) et dans lequel ledit système de collecte et de traitement des fumées (100) comprend une seconde ligne d'aspiration primaire (140) qui est connectée fluidiquement audit four poche (20) pour aspirer les fumées générées dans ledit four poche (20), dans lequel les fumées collectées par ladite seconde ligne d'aspiration primaire (140) sont combinées avec les fumées collectées par ladite première ligne d'aspiration primaire (110) avant d'être refroidies dans l'appareil de refroidissement des fumées (111).

17. Procédé selon la revendication 15 ou 16, dans lequel ladite installation sidérurgique (1) comprend une ou plusieurs stations auxiliaires (51, 52, 53, 54) qui sont adaptées pour soutenir opérationnellement l'activité de production d'acier et sont susceptibles de générer des émissions contenant principalement de la poussière, dans lequel ledit système de collecte et de traitement des fumées (100) comprend, pour chaque station auxiliaire (51, 52, 53, 54), une ligne d'aspiration auxiliaire (151, 152, 153, 154) qui est connectée fluidiquement à la station auxiliaire respective pour aspirer les émissions générées par ladite station, dans lequel les émissions collectées par chaque ligne d'aspiration auxiliaire (151, 152, 153, 154) sont envoyées directement à l'appareil de filtration (130).
